# EUROPEAN PATENT APPLICATION

(11) **EP 4 818 398 A1**
(43) Date of publication of application: **07.10.2026**
(21) Application number: 24895242.6
(22) Date of filing: 13.08.2024
(51) Int. Cl.: D21C 5/02, D21H 27/00

(54) **METHOD FOR RECYCLING PAPER MONEY OR SPECIAL PAPER, FIBROUS SUSPENSION, RECYCLED FIBRE, USE OF SAME, AND PAPER OBTAINED**

(30) Priority: 27.11.2023 BR 102023024821
(71) Applicant: Blendpaper Security Papeis Especiais S.A., SP 13324-240 Salto (BR); Casa da Moeda do Brasil - CMB, 23565-200 Rio de Janeiro - RJ (BR)
(72) Inventor: PEREIRA, Marcos, 22790-671 Rio de Janeiro - RJ (BR); SALLES RUIVO DE BARROS, Nathalia, 23045-830 Rio de Janeiro - RJ (BR); AMBROZIO GILBERTI, Alexandre, 13325-057 Salto - SP (BR)
(74) Representative: Ballester Cañizares, Rosalia
(86) International application number: PCT/BR2024/050357
(87) International publication number: WO 2025/111676

(57) **Abstract**

The present invention applies to the fields of recovery or utilization of waste materials. The present invention discloses a process for recycling banknotes. The banknote production process generates solid waste, such as paper rejected due to quality issues and printing defects, resulting in a considerable amount of waste that must be properly managed. In this context, with a view to solving the problem mentioned above, the present invention provides a process for recycling existing paper currency based on its composition. In this manner, the recycling of scraps from the banknote manufacturing process highlights the relevance of the circular economy and the responsible use of resources in the printing industry.

## Description

### FIELD OF APPLICATION

The present invention applies to the fields of recovery or utilization of waste materials. The present invention discloses a process for recycling waste material generated in the banknote production process.

### BACKGROUND OF THE INVENTION

The recycling of scraps generated from the banknote production process and/or the recycling of banknote paper represents a fundamental practice in the sustainable management of waste generated by banknote printing companies. The banknote production process typically generates solid waste from rejected printed or unprinted paper due to quality issues, paper rejected for print adjustments, possible paper resulting from jams in printing machines, trimming waste from the cutting process used to achieve the final banknote format, and also printed banknotes rejected due to printing defects or any other non-acceptable defects. To handle such rejects, the material is properly shredded (into scraps) using specialized machines at printing facilities in order to render de-characterize it, preventing any improper use of the material after its disposal or recycling.

These paper scraps can play a crucial role in waste reduction and in promoting sustainability. For instance, when subjected to a recycling process, they can be used as a fiber source in the manufacture of high-quality paper. This practice not only helps minimize environmental impact by reducing the amount of waste sent to landfills, but also contributes to the preservation of natural resources, as it avoids the need to produce paper from virgin raw materials.

In this context, in order to solve the above-mentioned problem, the present invention provides a process for recycling current banknote paper based on its composition. Thus, the recycling of scraps from the banknote production process illustrates the importance of the circular economy and the responsible use of resources in the printing industry.

### STATE OF THE ART

Patent document PI 9605508-1 describes the development of a technology that enables the recycling of paper containing formaldehyde-melamine-based chemical additives, a product commonly known as wet-strength principle. Such paper-in this case, paper money-is currently incinerated or disposed of in dumps and landfills, as there is no domestic technology that allows for its reuse by the recycling industry. This causes environmental and ecological problems, as this material does not decompose or dissolve in water; instead, it remains in the soil, intact, leaching printing ink and pollutants. This technology was developed to enable the recycling of such material, making it possible to reuse paper impregnated with formaldehyde-melamine. For this purpose, alkalis are jointly used, acting on the chemical bonds of the formaldehyde-melamine system.

Unlike what is disclosed in the above document, current banknote paper uses epichlorohydrin resin as the wet-strength principle (WS). The discontinuation of the use of urea resin for this purpose is associated with its high toxicity. Although this product has historically been used in papermaking to impart wet strength, this substance, which belongs to the formaldehyde resin family, is known for its strong and unpleasant odor as well as its toxic nature. With the change of chemical agent, the pulp operates under neutral conditions, at a pH of around 7. In the present invention, there is no need for the pulp to be soaked, and the process of the present invention is carried out for a period of up to 6 hours under controlled pressure.

Document CN109294034 discloses a method for converting banknote paper waste into recycled composite material. The method consists of the following steps: Step 1. Pre-treat banknote waste and confidential paper waste to optimize the structure and morphology of the fibers in order to obtain pre-modified fibers; Step 2. Weigh, in parts by weight: 30-50 parts of pre-modified fiber, 52-67 parts of recycled polyethylene particles, 1-3 parts of maleic anhydride-grafted polyethylene, 0.5-1 parts of polyethylene wax, 0.1-0.2 parts of light stabilizer, 0.1-0.2 parts of antioxidant 168; Step 3. The pre-modified fiber and the recycled polyethylene pellets weighed in Step 2 are placed in a high-speed mixer, thoroughly mixed, and then maleic anhydride-grafted polyethylene, polyethylene wax, a light stabilizer, and an antioxidant are sequentially added. The mixture is further blended with antioxidant 168 to obtain mixture I, and mixture I is fed into a twin-screw flat extruder through the main feed port in a uniform feeding manner, and material is extruded into pellets and sealed; Step 4. The extruded pellets obtained in step 3 are injection-molded using an injection molding machine and then demolded and cooled to obtain a composite material.

Unlike the present invention, the above-mentioned document discloses the transformation of paper scraps containing wet-strength (WS) agents as part of a polymeric material, which will serve as raw material for an extruder.

Document BR 10 2019 003165 4 describes the production of polymer composites based on polypropylene and banknotes (paper currency of any denomination) for the manufacture of polypropylene-based products. The polypropylene used may be virgin and/or recycled. Blends of polypropylene and other polyolefins are also contemplated, aiming to provide a viable alternative to significantly reduce the accumulation of such waste. This technology has enabled an efficient method for recovering banknote rejects unsuitable for circulation, based on the production of composites containing polypropylene, without the need for prior treatment of the banknotes or resin impregnation. The choice of polypropylene is related to its widespread industrial use, due to the diversity of products manufactured from this polymer. For this technology, existing production capacity was used to manufacture the same items typically produced from polypropylene, using composites produced with virgin and/or recycled polypropylene and banknotes. From the produced composite, it is possible to mold items used in the automotive and packaging industries, as well as to manufacture toys, furniture, and other products.

Unlike the present invention, the above-mentioned document discloses the reuse of banknotes as a component material in a polymeric composite intended for the manufacture of new products.

### SUMMARY OF THE INVENTION

The banknote production process generates solid waste, such as paper rejected due to quality issues and printing defects, resulting in a considerable amount of waste that must be properly managed.

In this context, with a view to solving the problem mentioned above, the present invention provides a process for recycling existing paper currency based on its composition. In this manner, the recycling of scraps generated from the banknote manufacturing process highlights the relevance of the circular economy, the responsible use of resources in the printing industry, the reduction in the consumption of virgin fibers in paper production, and the reduction in the volume of waste sent to landfills.

### BRIEF DESCRIPTION OF THE DRAWINGS

Figure 1 illustrates the simplified process flowchart, including step (c);
Figure 2 illustrates the material to be recycled;
Figures 3 and 4 illustrate the final product obtained in step (c).

### DETAILED DESCRIPTION OF THE INVENTION

The invention can be better understood from the following detailed description, in conjunction with the accompanying figures.

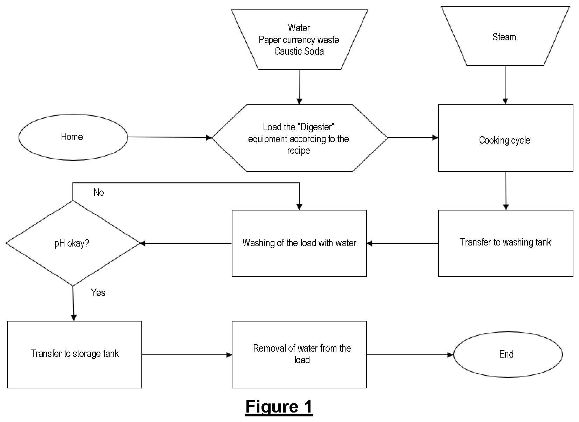

As shown in part of Figure 1, the present invention discloses a process for recycling special or security paper, comprising the steps of:
(a) Perform thermal and chemical treatment of the material to be recycled by pressure cooking; and
(b) Wash the material.

Special or security paper is defined as: paper currency, wine labels, sandpaper, passports, decorative paper, stamps, official documents, and others, which contain moisture-resistant resin (MR).

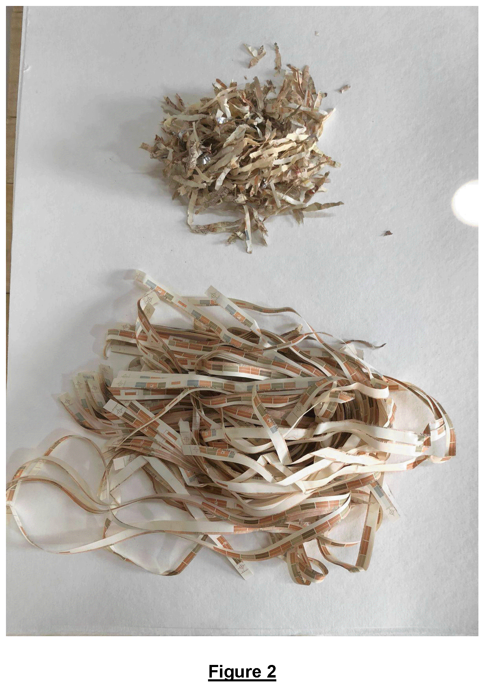

The material to be recycled is special or security paper, preferably composed of 100% by weight cotton and wet-strength resin content (RU) greater than 0.25% of the final paper (1,000 kg cotton paper / 2.50 kg resin), such as waste materials from banknote production or from any other source, for example, banknotes withdrawn from circulation, without the need for prior cleaning. In addition, the size of the material used in the process may vary; however, it is recommended to use shredded material, as shown in Figure 2, since a larger contact area enhances the chemical reactions involved. Nevertheless, the size is not a limiting factor.

The process is carried out in batches; thus, in step (a), the material is weighed-for example, 1,000 kg or 2,000 kg-depending on the equipment used in the process. The material undergoes thermal and chemical treatment to break it down into reusable fibers, reduce the original wet strength of the special or security paper, dissolve the polyester-based security threads, and disperse the various inks, metallic pigments, resins, and varnishes used in the banknote printing process.

Thermal and chemical treatment is carried out in equipment that agitates the contents during the cooking process, such as digesters or rotary autoclaves of spherical or cylindrical shape. Ideally, this equipment is made of carbon steel and externally coated with insulating material to improve heat transfer and minimize heat loss.

For example, the capacity of a spherical digester with a volume of 10.8 m³ is 1,000 kg of material per batch, while that of a cylindrical digester with a volume of 23 m³ is 2,000 kg per batch.

The material to be recycled is mixed with water and an alkaline agent, preferably caustic soda. The concentration of the alkaline agent used is 48.5% to 50.5% by weight, preferably 50% by weight. The ratios used in the process consist of a mixture of 2 parts water and 0.1 parts alkaline agent per 1 part of material to be recycled (by volume or weight); for example, for every 2,000 L of water, 1,000 kg of material to be recycled and 100 L of alkaline agent are used. The quality of the water to be used is consistent; for example, industrial water may be used, which has a color standard > 30 u.c. and turbidity > 2.0 NTU. After the equipment is loaded with the material to be recycled, water, and an alkaline solution, it is hermetically sealed to begin the pressure cooking process.

The internal pressure of the equipment is increased from 4.3 to 4.7 bar and controlled by introducing saturated steam from, for example, a boiler in the company's utility area.

A motion-preferably a rotational one-is applied to homogenize the material during the process, ensuring that the chemicals interact uniformly with the chips being treated.

Once the material has finished cooking-a process that can take up to 7 hours-the pressure in the equipment is gradually released over a period of up to 3 hours, for example, to atmospheric pressure (1 atm = 101325 Pa) via relief valves. Once the cooking equipment has been depressurized, the airtight lid is opened, and the processed material is transferred to a tank, where it will be fed into the next stage: washing the material.

In step (b), the material is washed to lower the pH of the medium, preferably under moderate agitation. The washing process involves adding water with a pH close to 7 to the tank and soaking the material that has just been cooked in the equipment-as described in step (a)-for an average of 3 hours. Optionally, 11-12% w/w aluminum sulfate with a pH of 3.0 can be added to the 1% solution at a ratio of 0.02 parts aluminum sulfate to 1 part recycled material (volume/mass) to speed up the washing process by lowering the pH. The water is then drained, and fresh water is added to the wash tank. Throughout the washing process, the pH of the suspension is monitored; when values between 7.0 and 8.0 are reached, the process is completed, resulting in a fibrous suspension with a neutral pH that can be used in the production of any product that utilizes this raw material, including paper and any other product of fibrous origin.

The fibrous suspension obtained from the process has a neutral pH between 7.0 and 8.0 and a water content of 50%.

In order to produce specialty paper, an additional step can be added to the process: water removal (step c). This extraction process facilitates the use of the fiber suspension in the paper-making process.

In step (c), water is removed from the material after washing by draining the water from the fibrous suspension through gravity dewatering on a forming screen, such as one made of polyester; the material is then pressed, for example, using pneumatic pressure of between 3 - 4 bar, and preferably using a wet press until the moisture content in the recycled material reaches up to 50%.

Optionally, the wet press can be lined with felt.

This process does not completely remove the color from the base material, and the resulting fibers still contain a certain amount of particles from pigments, security threads, etc.

Total material loss is estimated at approximately 10% of the original quantity of banknote scraps initially purchased.

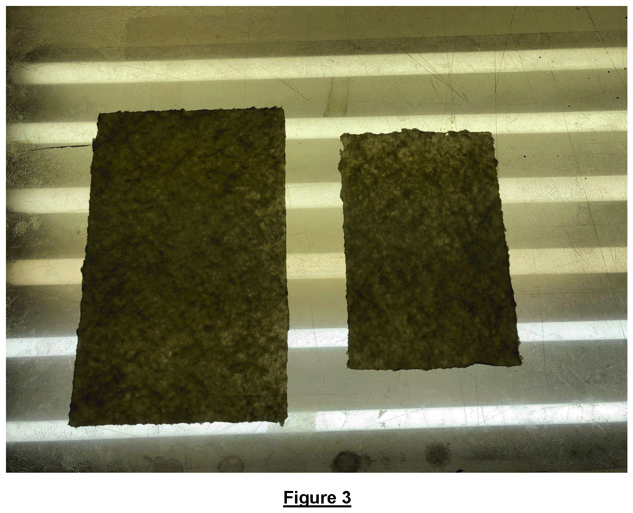

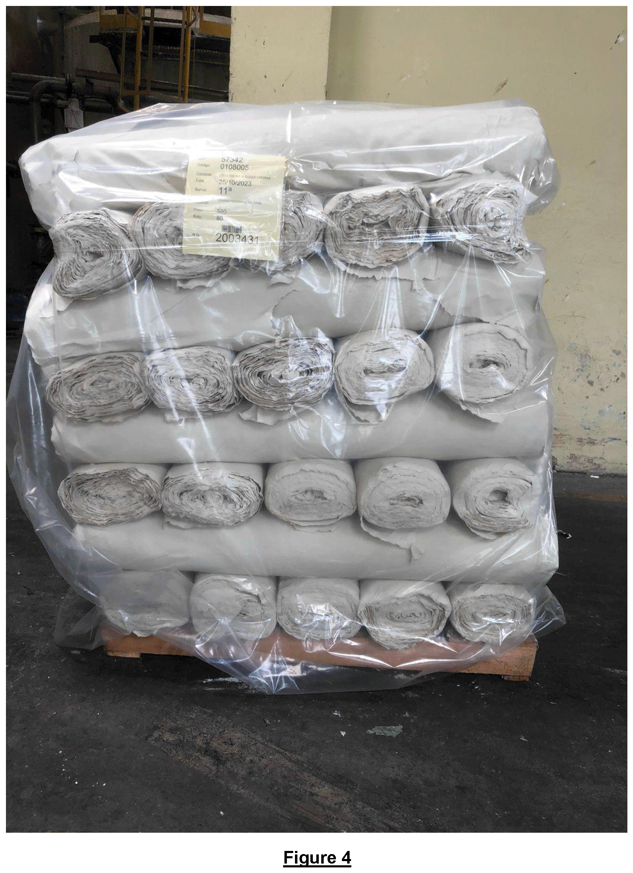

At the end of step (c), a recycled fiber is obtained that can be used in the production of paper and any other fiber-based product, as shown in Figures 3 and 4.

The fiber obtained from the process, including step (c), has a pH between 7.0 and 8.0, an average moisture content of 10% to 50%, and a light, opaque color.

Thus, the special paper produced by the process of the present invention can be obtained directly from step (b) using the fibrous suspension, or from the fiber obtained after step (c).

The fibrous suspension, as well as the fiber obtained from the process, can be used to manufacture paper or any other fiber-based product, such as packaging, sanitary mats, and sound insulation, among others.

In this way, any paper product or any other product of fibrous origin-such as specialty paper, banknotes, passports, and revenue stamps-can be produced, provided that one of its components is the fibrous suspension or fiber obtained by the process of the present invention.

As can be seen, the present invention facilitates the circular economy of a product-banknote waste-which, until now, has not been possible to repurpose for the manufacture of the base product: paper. This reduces dependence on virgin raw materials and provides a valuable renewable feedstock option for the paper industry: cotton fiber.

The invention will be illustrated by the following examples, without being limited to them or by them.

### Examples

### Example 1: Production of special recycled paper using fiber obtained from the additional step (c)

To produce a special type of recycled paper, the fiber obtained in step (c) undergoes a process of breaking down the fibrous raw materials. In other words, the material passes through a tank equipped with rotating blades that break up the material being fed into it. The mixture is prepared to a consistency (mass concentration) of approximately 5%; that is, a 5% consistency means a ratio of 5 g of fibrous material (solid) to 100 g of water (liquid).

This disaggregated pulp then passes through rotating blades that modify the fibers as needed for paper production, with the following parameters being optionally controlled: inlet and outlet pressure (2.5 to 4.0 Pa), the equipment's electrical current (which must be constant), and the Schopper degree (°SR-a unit of measurement referring to the degree of drainage of a fibrous suspension) according to the desired specification for the final paper.

This refined pulp is sent to a tank where additives such as dyes and bleaches are added, along with continuous dosing of binders, starch, retention aids, coagulants, mineral fillers, and other ingredients, depending on the desired characteristics of the final product. The refined pulp is purified to remove some of the impurities in various centrifugal purifiers and is fed through a distributor to the headbox of the paper machine, after which it flows into the tank that feeds the paper machine.

The headbox distributes this fibrous suspension through a metering lip onto the flat table (Fourdrinier), whose function is to form the paper by draining it onto a perforated plastic screen. At the end of this stage, the continuous sheet of paper has a dry content of approximately 20%.

After this, the sheet passes through presses fitted with felts to absorb the water squeezed out by the pressure, until it reaches a dry content of approximately 40%.

The sheet then passes through steam-heated cylinders to dry until the final product moisture content of approximately 5% is reached.

Midway through the drying process, the paper web may undergo a surface sizing treatment (usually with a modified starch) to improve certain properties of the paper in a dosing unit called a size press.

After this treatment, the paper is dried again using steam-heated cylinders or infrared dryers.

Some papers still undergo mechanical treatment using heated steel or rubber-coated calenders to improve the uniformity of the paper's surface (smoothness, roughness) and to adjust the product's thickness to some extent.

The paper is then wound onto reels and removed from the paper machine.

These rolls, known as jumbo rolls, are intended for use in a finishing machine called a rewinder, where they are wound under tension and cut to the required width into reels.

These rolls can then be packaged for shipment and sale, or fed into slitting machines where they are cut into sheets and subsequently packaged for sale.

The present invention has been disclosed in this description in terms of its preferred embodiment. However, other modifications and variations are possible based on the present description and are still within the scope of the invention disclosed herein.

## Claims

1. A process for recycling specialty or security paper, **CHARACTERIZED in that** it comprises the steps of:
(a) subject the material to be recycled to thermal and chemical treatment by pressure cooking; and
(b) wash the material.

2. Process according to claim 1, **CHARACTERIZED in that** the material to be recycled is special or security paper, preferably having a composition of 100% by weight cotton and wet-strength resin (RU) in an amount exceeding 0.25% of the paper.

3. Process according to claim 1 or 2, **CHARACTERIZED in that** the size of the material used in the process is variable, preferably the material being shredded.

4. Process according to any one of claims 1 to 3, **CHARACTERIZED in that** the process is carried out in batch, wherein, in step (a), the material to be recycled is subjected to thermal and chemical treatment in equipment that agitates during the cooking process, wherein the material to be recycled is mixed with water and an alkaline agent, wherein the concentration of the alkaline agent used is 48.5% to 50.5% by weight; the proportions comprising a charge of 2 parts water and 0.1 part alkaline agent for 1 part material to be recycled (volume/weight); wherein, after feeding the equipment with the material to be recycled, water, and the alkaline agent solution, the equipment is hermetically sealed to begin the pressure cooking process, during which the internal pressure is raised to 4.3 to 4.7 bar and controlled by introducing saturated steam; once the material has finished cooking, the pressure in the equipment is gradually released to atmospheric pressure to open the hermetic lid, and the treated material is transferred to a tank.

5. Process, according to claim 4, **CHARACTERIZED in that** the equipment providing agitation during the cooking stage comprises digesters or rotary autoclaves of spherical or cylindrical shape, made of carbon steel and externally coated with an insulating material.

6. Process according to any one of claims 1 to 5, **CHARACTERIZED in that**, in step (b), the washing of the material under agitation is carried out under agitation; wherein the washing comprises introducing water with a pH close to 7 into the tank and soaking the freshly cooked material from step (a), for 3 hours; subsequently, the water is removed and fresh water is introduced into the washing tank; during the washing step, the pH of the suspension is controlled, and when values between 7.0 and 8.0 are reached, the process is terminated, thereby obtaining a fibrous suspension.

7. Process according to claim 6, **CHARACTERIZED in that** aluminum sulfate is further added at 11-12% w/w and pH 3.0 for a 1% solution, in a proportion of 0.02 parts aluminum sulfate per 1 part recycled material (volume/mass).

8. Process according to claim 6, **CHARACTERIZED in that** it further comprises a step (c) for producing specialty paper, namely the extraction of water, carried out by removing water from the fibrous suspension through gravity drainage on a forming wire, and subsequently pressing the material, preferably with in a wet press, to a moisture content of up to 10%.

9. Process, according to claim 8, **CHARACTERIZED in that** the wet press is additionally coated with felt.

10. Fibrous suspension **CHARACTERIZED in that** it is obtained by the process as defined in claim 1, comprising a neutral pH between 7.0 and 8.0 and 50% water content.

11. Recycled fiber **CHARACTERIZED in that** it is obtained from water removal from the fibrous suspension as defined in claim 10, comprising a pH between 7.0 and 8.0, an average moisture content of 10% to 50%, and a light and opaque color tone.

12. Use of fibrous suspension, as defined in claim 10, **CHARACTERIZED in that** it is for the production of paper or fibrous products.

13. Use of recycled fiber, as defined in claim 11, **CHARACTERIZED in that** it is for the production of paper or fibrous products.

14. Paper or fibrous products **CHARACTERIZED by** comprising a fibrous suspension, as defined in claim 10, or recycled fiber, as defined in claim 11.
